# FASCICULE DE BREVET EUROPEEN

(11) **EP 2 479 062 B1**
(45) Date de publication et mention de la délivrance du brevet: **02.12.2020**
(21) Numéro de dépôt: 12151772.6
(22) Date de dépôt: 19.01.2012
(51) Int. Cl.: B60Q 1/00

(54) **Equipement électrique pour véhicule automobile, en particulier dispositif d'eclairage ou de signalisation**
Elektrische Ausstattung für Kraftfahrzeug, insbesondere Beleuchtungs- oder Signalisierungsvorrichtung
Electrical equipment for an automobile, in particular a lighting or signalling device

(30) Priorité: 21.01.2011 FR 1150477
(43) Date de publication de la demande: 25.07.2012
(73) Titulaire: Valeo Vision, 93012 Bobigny Cedex (FR); PSA Automobiles SA, 78300 Poissy (FR)
(72) Inventeur: Chatel, Eric, 49460 Montreuil Juigné (FR); Denis, Sébastien, 49000 Angers (FR); Bera, Sébastien, 49100 Angers (FR); Bouret, Pascal, 78610 Les Breviaires (FR)
(74) Mandataire: Ménès, Catherine

(56) Documents cités:
- DE-A1- 19 632 909
- DE-A1-102005 035 577
- DE-A1-102006 043 859
- FR-A1- 2 804 744
- US-A1- 2009 129 110

## Description

L'invention est relative à un équipement électrique pour véhicule automobile comportant un boîtier dans lequel au moins un composant électronique est disposé à proximité d'une paroi du boîtier accessible du côté opposé au composant.

L'invention concerne plus particulièrement un équipement électrique constitué par un dispositif d'éclairage ou de signalisation pour véhicule automobile.

Le boîtier d'un tel équipement, notamment d'un projecteur lumineux, forme généralement un ensemble difficilement démontable, ou non démontable, de sorte qu'en cas de défaillance d'un composant électronique situé à l'intérieur de cet ensemble, il convient de remplacer l'ensemble complet.

Il est donc souhaitable de proposer un équipement électrique du genre défini précédemment qui permette une réparation simple sans avoir à changer tout l'ensemble de l'équipement en cas de défaillance de l'un des composants électroniques. Il est également souhaitable que l'équipement électrique ne soit pas rendu plus complexe, ni coûteux.

Un équipement électrique comprenant les caractéristiques du préambule de la revendication 1 est par exemple connu du document DE 10 2006 043859 A1.

Selon l'invention, un équipement électrique pour véhicule automobile, en particulier dispositif d'éclairage ou de signalisation, comportant un boîtier dans lequel un composant électronique est disposé à proximité d'une paroi du boîtier accessible du côté opposé au composant, ladite paroi de boîtier comportant une portion sécable qui peut être retirée pour libérer une ouverture permettant le remplacement du composant électronique, ladite paroi de boîtier comportant en outre des moyens pour fixer un capot de fermeture de ladite ouverture après retrait de la portion sécable, et un moyen d'étanchéité sur au moins une portion du pourtour de l'ouverture pour coopérer avec un moyen d'étanchéité conjugué prévu sur le capot et assurer une fermeture étanche, est caractérisé en ce que:
l'équipement comporte au moins une source de lumière du type LED commandée par une carte électronique, le composant électronique étant constitué par la carte électronique.

Grâce à l'invention, il est ainsi possible d'accéder à un composant constitué par une carte électronique situé à l'intérieur du boîtier pour remplacer ce composant défaillant, sans avoir à changer la totalité de l'équipement. L'ouverture libérée par le retrait de la portion de paroi sécable est refermée, après remplacement du composant, par le capot.

Le dispositif selon l'invention est relativement simple et économique.

Le moyen d'étanchéité prévu sur le pourtour de l'ouverture peut comporter au moins une nervure en saillie vers l'extérieur, propre à appuyer contre une garniture d'étanchéité prévue sur le capot et constituant le moyen d'étanchéité conjugué.

Les moyens pour fixer le capot de fermeture peuvent comprendre, sur la paroi, des fûts répartis sur le pourtour de la périphérie de la portion sécable, chaque fût comportant un logement pour vis de fixation,

La paroi de boîtier est avantageusement réalisée en matière plastique, en particulier par moulage. La portion sécable est délimitée par un contour de moindre épaisseur, frangible. Le contour de la portion sécable peut être sensiblement rectangulaire.

L'invention concerne plus particulièrement un équipement en forme d'un dispositif d'éclairage ou de signalisation dont le boîtier est fermé par un dôme translucide ou transparent, en particulier une glace, fixé à la paroi comportant la portion sécable.

Le dispositif d'éclairage peut être constitué par un projecteur lumineux de véhicule, en particulier un feu diurne DRL, et la paroi de boîtier comportant la portion sécable est tournée vers le compartiment moteur du véhicule, et est accessible depuis ce compartiment.

L'invention est également relative à un procédé de remise en état d'un équipement électrique, notamment d'un projecteur lumineux pour véhicule automobile, tel que défini précédemment, dont un composant électronique, en particulier une carte électronique, est défaillant, caractérisé en ce que :
- on retire la portion sécable de la paroi, dégageant ainsi une ouverture,
- on extrait le composant défaillant à travers l'ouverture,
- et on installe un composant de remplacement.

De préférence, on ferme l'ouverture dégagée dans la paroi par un capot.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig. 1 est une vue en perspective de l'arrière d'un boîtier de dispositif d'éclairage pour véhicule automobile selon l'invention.
Fig. 2 représente, semblablement à Fig. 1, la paroi arrière du boîtier après retrait de la portion sécable, le composant électronique, sous forme d'une carte électronique, étant schématiquement représenté.
Fig. 3 montre, semblablement à Fig. 2, le boîtier équipé du capot de fermeture, et
Fig. 4 est une section à plus grande échelle suivant la ligne IV-IV de Fig. 3 illustrant l'assemblage étanche de la paroi et du capot.

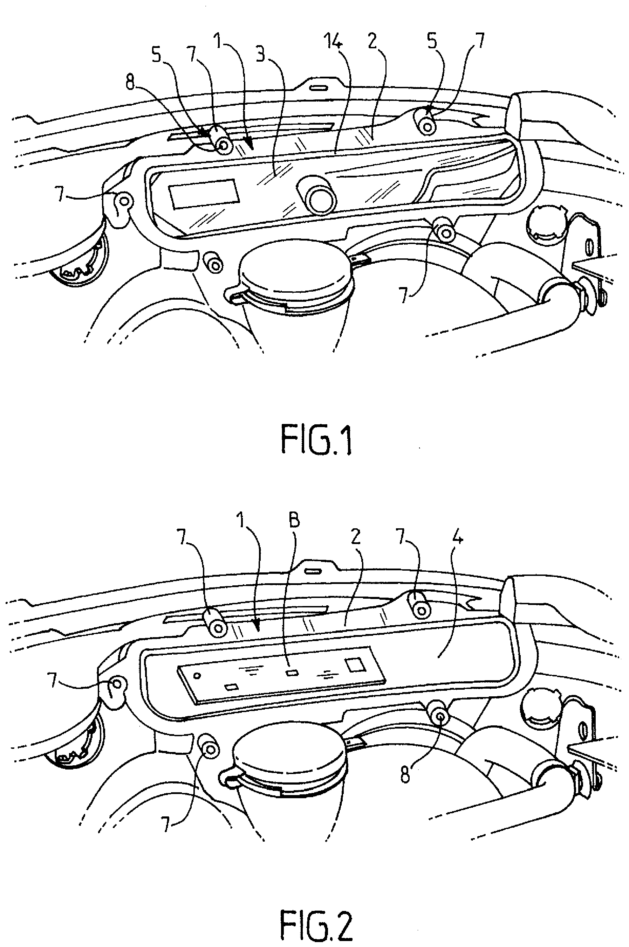

En se reportant à Fig. 1 des dessins, on peut voir, de l'arrière, un boîtier 1 de dispositif d'éclairage pour véhicule automobile. Le boîtier 1 présente une paroi arrière 2 accessible depuis le compartiment moteur, du côté opposé à l'intérieur du boîtier 1. Au moins une source de lumière (non représentée) est commandée par une carte électronique (non représentée) située dans le boîtier 1 à proximité de la paroi 2.

Cette paroi 2 comporte une portion sécable 3 qui peut être retirée, comme illustrée sur Fig. 2, pour libérer une ouverture 4 de forme sensiblement rectangulaire. Généralement, la grande dimension de l'ouverture 4 est sensiblement horizontale lorsque le boîtier est installé dans le véhicule.

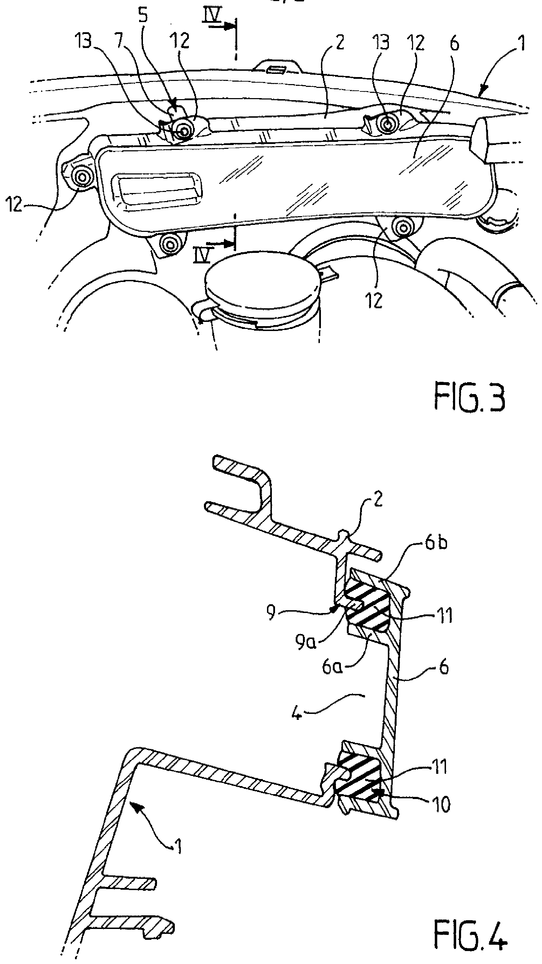

La paroi 2 comporte en outre des moyens de fixation 5 d'un capot 6 (Fig. 3 et 4) pour fermeture de ladite ouverture 4 après retrait de la portion sécable 3. Les moyens de fixation 5 comprennent de préférence des fûts 7. Chaque fût 7 comporte un logement 8 ouvert vers l'arrière, d'axe sensiblement horizontal, pour recevoir une vis de fixation du capot. Les fûts 7 sont répartis sur le pourtour de la périphérie de la portion sécable 2. Dans l'exemple représenté, non limitatif, deux fûts 7 sont prévus respectivement sur le côté supérieur et le côté inférieur de l'ouverture 4, et un fût 7 est prévu sur le petit côté situé sur la gauche de Fig. 1.

La paroi 2 de boîtier, comme visible sur Fig. 4, comporte un moyen d'étanchéité 9 prévu sur au moins une portion du pourtour de l'ouverture 4. Ce moyen d'étanchéité est avantageusement constitué par une nervure 9a sur tout le pourtour de l'ouverture 4, en saillie vers l'extérieur, du côté prévu pour recevoir le capot 6. Ce capot 6 présente un contour propre à épouser celui de l'ouverture 4 et un moyen d'étanchéité 10 conjugué de celui 9 de la paroi 2.

Le moyen d'étanchéité 10 est avantageusement constitué par une garniture 11 en matière souple, notamment en matière élastomère, logée dans une rainure périphérique, tournée vers la paroi 2 et délimitée par deux bordures 6a, 6b du capot 6. La garniture 11 forme un joint souple, et peut être avantageusement moulée.

Comme visible sur Fig. 3, le capot comporte, à sa périphérie, des oreilles de fixation 12 propres à venir en regard des fûts 7 lorsque le capot 6 est en place, pour une fixation par vis 13 traversant les oreilles 12 et en prise dans les fûts 7.

Le boîtier 1, de même que le capot 6, peut être réalisé en matière plastique, de préférence moulée par injection. La portion sécable 3 de la paroi 2 du boîtier est délimitée par un contour 14 de moindre épaisseur, frangible.

Pour remettre en état de fonctionnement le dispositif d'éclairage, lorsque la carte électronique commandant une source lumineuse est défaillante, on procède comme suit.

On retire la portion sécable 3 de la paroi 2, le cas échéant à l'aide d'un outil, par découpe suivant la ligne de rupture 14, de manière à dégager l'ouverture 4 (Fig. 2), ce qui fait apparaître la carte électronique B à remplacer.

On extrait la carte électronique B défaillante à travers l'ouverture 4 et on installe une carte électronique de remplacement.

On ferme ensuite l'ouverture 4 en appliquant le capot 6 contre le bord de cette ouverture de manière que la nervure d'étanchéité 9a entourant l'ouverture 4 appuie contre la garniture d'étanchéité 11 du capot 6 comme illustré sur Fig. 4. Le capot 6 est fixé à l'aide de vis 13 traversant les oreilles 12 et engagées dans les logements des fûts 7.

L'invention permet ainsi de réparer de manière simple un projecteur de véhicule automobile, notamment un projecteur de feu diurne ou DRL, sans avoir à changer l'ensemble du boîtier.

De manière plus générale, l'invention peut s'appliquer à tout équipement électronique de véhicule automobile enfermé dans un boîtier.

## Revendications

1. Equipement électrique pour véhicule automobile, en particulier dispositif d'éclairage ou de signalisation, comportant un boîtier (1) dans lequel un composant électronique est disposé à proximité d'une paroi (2) du boîtier accessible du côté opposé au composant,
- ladite paroi (2) de boîtier comportant une portion sécable (3) qui peut être retirée pour libérer une ouverture (4) permettant le remplacement du composant électronique,
- ladite paroi de boîtier comportant en outre des moyens (5) pour fixer un capot (6) de fermeture de ladite ouverture après retrait de la portion sécable, et un moyen d'étanchéité (9) sur au moins une portion du pourtour de l'ouverture pour coopérer avec un moyen d'étanchéité conjugué (10) prévu sur le capot (6) et assurer une fermeture étanche, **caractérisé en ce que** l'équipement comporte au moins une source de lumière du type LED commandée par une carte électronique, le composant électronique étant constitué par la carte électronique.

2. Equipement selon la revendication 1, **caractérisé en ce que** le moyen d'étanchéité (9) prévu sur le pourtour de l'ouverture (4) comporte au moins une nervure (9a) en saillie vers l'extérieur, propre à appuyer contre une garniture d'étanchéité (11) prévue sur le capot (6) et constituant le moyen d'étanchéité conjugué.

3. Equipement selon l'une quelconque des revendications précédentes, **caractérisé en ce que** les moyens pour fixer le capot de fermeture comprennent, sur la paroi, des fûts (7) répartis sur le pourtour de la périphérie de la portion sécable, chaque fût comportant un logement (8) pour vis de fixation (13).

4. Equipement selon l'une quelconque des revendications précédentes, **caractérisé en ce que** la portion sécable (3) est délimitée par un contour de moindre épaisseur, frangible, la paroi de boîtier étant avantageusement réalisée en matière plastique, en particulier par moulage.

5. Equipement selon l'une quelconque des revendications précédentes, **caractérisé en ce que** le contour de la portion sécable (3) est sensiblement rectangulaire.

6. Équipement électrique en forme d'un dispositif d'éclairage pour véhicule automobile, selon l'une quelconque des revendications précédentes, constitué par un projecteur lumineux de véhicule, en particulier un feu diurne DRL, la paroi (2) de boîtier comportant la portion sécable (3) étant tournée vers le compartiment moteur du véhicule, et étant accessible depuis ce compartiment.

7. Procédé de remise en état d'un équipement électrique, notamment d'un projecteur lumineux pour véhicule automobile, selon l'une quelconque des revendications 1 à 6, dont un composant électronique, en particulier une carte électronique, est défaillant, **caractérisé en ce que** :
- on retire la portion sécable (3) de la paroi (2), dégageant une ouverture (4),
- on extrait le composant défaillant à travers l'ouverture,
- et on installe un composant de remplacement.

8. Procédé selon la revendication 7. **caractérisé en ce que** l'on ferme l'ouverture (4) dégagée dans la paroi (2) par un capot (6).

## Patentansprüche

1. Elektrisches Gerät für ein Kraftfahrzeug, insbesondere Beleuchtungs- oder Signaleinrichtung, mit einem Gehäuse (1), in dem ein elektronisches Bauteil in der Nähe einer auf der dem Bauteil gegenüberliegenden Seite zugänglichen Gehäusewand (2) angeordnet ist,
- die Gehäusewand (2) einen teilbaren Teil (3) aufweist, der entfernt werden kann, um eine Öffnung (4) freizugeben, die den Austausch des elektronischen Bauteils ermöglicht;
- die Gehäusewand ferner Mittel (5) zum Befestigen einer Kappe (6) zum Schließen der Öffnung nach dem Entfernen des abtrennbaren Abschnitts und Dichtmittel (9) an mindestens einem Teil des Umfangs der Öffnung aufweist, um mit einem an der Kappe (6) vorgesehenen Gegendichtmittel (10) zusammenzuwirken und einen abdichtenden Verschluss zu gewährleisten, **dadurch gekennzeichnet, dass** das Gerät mindestens eine Lichtquelle des LED-Typs aufweist von einer elektronischen Karte gesteuert, wobei das elektronische Bauteil aus der elektronischen Karte besteht.

2. Vorrichtung nach Anspruch 1, **dadurch gekennzeichnet, dass** das am Umfang der Öffnung (4) vorgesehene Dichtmittel (9) mindestens eine nach außen vorstehende Rippe (9a) aufweist, die geeignet ist, gegen eine an der Kappe (6) vorgesehene Dichtung (11) zu drücken, die das Gegendichtmittel bildet.

3. Vorrichtung nach einem der vorhergehenden Ansprüche, **dadurch gekennzeichnet, dass** die Mittel zum Befestigen der Verschlusskappe an der Wand Fässer (7) umfassen, die über den Umfang des Umfangs des teilbaren Abschnitts verteilt sind, wobei jeder Schaft eine Aufnahme (8) für eine Befestigungsschraube (13) aufweist.

4. Vorrichtung nach einem der vorhergehenden Ansprüche, **dadurch gekennzeichnet, dass** der teilbare Abschnitt (3) durch eine zerbrechliche, dünnere Kontur begrenzt ist, wobei die Gehäusewand vorzugsweise aus Kunststoff, insbesondere durch Gießen, hergestellt ist.

5. Vorrichtung nach einem der vorhergehenden Ansprüche, **dadurch gekennzeichnet, dass** die Kontur des teilbaren Abschnitts (3) im Wesentlichen rechteckig ist.

6. Elektrisches Gerät in Form einer Beleuchtungseinrichtung für ein Kraftfahrzeug nach einem der vorhergehenden Ansprüche, das aus einem Fahrzeugscheinwerfer, insbesondere einer Tagleuchte DRL, besteht, wobei die Gehäusewand (2) mit dem abnehmbaren Teil (3) dem Motorraum des Fahrzeugs zugewandt ist und von diesem aus zugänglich ist.

7. Verfahren zur Instandsetzung einer elektrischen Anlage, insbesondere eines Kraftfahrzeugscheinwerfers, nach einem der Ansprüche 1 bis 6, bei dem ein elektronisches Bauteil, insbesondere eine elektronische Karte, fehlgeschlagen ist, **dadurch gekennzeichnet, dass**
- der trennbare Teil (3) der Wand (2) entfernt wird, wodurch eine Öffnung (4) freigesetzt wird;
- Das fehlerhafte Bauteil wird durch die Öffnung entfernt.
- und ein Ersatzbauteil installiert wird.

8. Verfahren nach Anspruch 7, **dadurch gekennzeichnet, dass** die in der Wand (2) freigelegte Öffnung (4) durch eine Abdeckung (6) verschlossen wird.

## Claims

1. Electric equipment for motor vehicles, in particular lighting or signaling devices, incorporating a housing (1) in which an electronic component is placed close to a wall (2) of the housing accessible on the side opposite the component,
- the said wall (2) of a housing with a securely attached portion (3) that can be removed to release an opening (4) that allows the replacement of the electronic component,
- the said enclosure wall having in addition means (5) to secure a cover (6) for the closure of the said opening after removing the secable portion, and a means of sealing (9) on at least one portion of the opening circumference to cooperate with a means of conjugated sealing (10) provided on the cover (6) and to ensure a watertight closure, **characterized by** the equipment having at least one source of light LED type controlled by an electronic card, the electronic component being made by the electronic card.

2. Equipment according to claim 1, characterized that the sealing device (9) provided on the opening circumference (4) has at least one rib (9a) protruding outwards, suitable for supporting against a sealing lining (11) provided on the hood (6) and constituting the means of joint sealing.

3. Equipment according to any of the preceding claims, characterized as the means of securing the closing cover include, on the wall, drums (7) distributed on the edge of the secable portion, each barrel having a housing (8) for fastening screws (13).

4. Equipment according to any of the previous claims, **characterized in that** the secable portion (3) is bounded by a contour of less thickness, frangible, the housing wall being specially made of plastic, in particular by molding.

5. Equipment according to any of the previous claims, characterized as the contour of the secable portion (3) is noticeably rectangular.

6. Electrical equipment in the form of a lighting device for motor vehicles, according to any of the preceding claims, consisting of a vehicle light projector, in particular a DRL daytime lamp, the wall (2) of housing having the securely part (3) being turned towards the engine compartment of the vehicle, and being accessible from that compartment.

7. Process for the refurbishment of electrical equipment, including a light projector for motor vehicles, according to any claim 1 to 6, of which an electronic component, in particular an electronic card, is faulty, **characterized by**:
- remove the secable portion (3) of the wall (2), releasing an opening (4),
- the failed component is extracted through the opening,
- and a replacement component is installed.

8. Process according to Claim 7, **characterized by** closing the opening (4) in the wall (2) by a hood (6).
